# EUROPEAN PATENT APPLICATION

(11) **EP 2 110 973 A2**
(43) Date of publication of application: **21.10.2009**
(21) Application number: 08022343.1
(22) Date of filing: 23.12.2008
(51) Int. Cl.: H04J 3/06

(54) **Technique for synchronizing network access modules in a mobile communication device**

(30) Priority: 15.04.2008 US 44962 P
(71) Applicant: Telefonaktiebolaget L M Ericsson (publ), 164 83 Stockholm (SE)
(72) Inventor: Lerzer, Jürgen, 92318 Neumarkt/OPf (DE); Meyer, Stefan, 91315 Höchstadt (DE); Schaller, Bernd, 90482 Nürnberg (DE)
(74) Representative: Röthinger, Rainer

(57) **Abstract**

A technique for synchronizing different network access modules in a mobile communication device (100) is provided. A device embodiment (100) comprises a first network access module (102) having a first radio access technology, or RAT, interface (110) and being clocked at a first clock frequency and a second network access module (104) having a second RAT interface (140) and being clocked at a second clock frequency. A method implementation of this technique comprises the steps of generating a first clock signal having the first clock frequency, receiving a second clock signal having the first clock frequency, the second clock signal being derived from a third clock signal clocking the second network access module (104) and selectively switching to either the first clock signal or the second clock signal for being used as a reference clock signal in the first network access module (102).

## Description

### Technical field

The present invention generally relates to the field of synchronizing network access modules. In particular, the invention relates to a technique for synchronizing different network access modules in a mobile communication device comprising a first network access module having a first radio access technology (RAT) interface and being clocked at a first clock frequency and a second network access module having a second RAT interface and being clock at a second clock frequency.

### Background

Multi-RAT mobile communication devices are capable of communicating via different RAT interfaces. For example, most 3^{rd} Generation (3G) mobile communication devices are capable of communicating based on the Global System for Mobile Communication (GSM) and the Wideband Code Division Multiple Access (WCDMA) standards. In such multi-RAT mobile communication devices, the different RAT interfaces are typically integrated in one network access module which is implemented as a one-chip solution.

However, the design effort for integrating different RAT interfaces in one network access module is high, in particular since the different RAT interfaces share common resources and have to be adjusted to each other. Furthermore, integrating different RAT interfaces in one network access module lacks flexibility, since for adding an additional RAT interface or replacing one RAT interface with another RAT interface, the one-chip solution has to be designed anew.

Moreover, future RAT interfaces (e.g., according to the Long Term Evolution (LTE) standard) are becoming more and more complex so that it is technically difficult or may even become technically impossible to integrate a future RAT interface with another RAT interface in one network access module.

In order to avoid the design effort and the disadvantages of integrating different RAT interfaces in one network access module, it could be thought about implementing each RAT interface in a separate network access module in the mobile communication device, as is known, for example, from US 2007/0173283 A1. For such an implementation, the need to synchronize the separate network access modules arises.

### Summary

Accordingly, there is a need for a technique for synchronizing two or more network access modules in a mobile communication device which is avoiding at least some of the disadvantages outlined above.

This need is satisfied according to a first aspect by a method for synchronizing different network access modules in a mobile communication device comprising a first network access module having a first RAT interface and being clocked at a first clock frequency and a second network access module having a second RAT interface and being clocked at a second clock frequency. The method comprises the steps of generating a first clock signal having the first clock frequency, receiving a second clock signal having the first clock frequency, the second clock signal being derived from a third clock signal clocking the second network access module, and selectively switching to either the first clock signal or the second clock signal for being used as a reference clock signal in the first network access module.

In order to enable a secure and stable communication of the mobile communication device via the first and the second RAT interface, the first network access module may thus be synchronized with the second network access module in that it selectively uses the second clock signal as its reference clock signal.

The first and the second RAT interfaces may be components that enable communication of the mobile communication device with at least one access network. In one implementation, each RAT interface is capable of communicating with at least one kind of access network. The individual network access modules may be realized in various ways. In one implementation, at least one of the modules is realized in the form of a delimitated chip or chip set. The delimitated chip or chip set may comprise Radio Frequency (RF) components tailored to support the respective RAT interface and, additionally or alternatively, a digital baseband (DBB) processor adapted to perform baseband processing operations for the respective RAT. In one variation, at least one of the network access modules and RAT interfaces may comprise or may be constituted by an Application Specific Integrated Circuit (ASIC), a Digital Signal Processor (DSP) or a Field Programmable Gate Array (FPGA).

In accordance with the paradigm of modularity, at least one of the network access modules may be configured to be re-useable either in a stand-alone configuration or in a dual (or triple, etc.) mode configuration. In a multi-mode configuration, two or more modules may be co-located within one and the same hardware device and may be provided with optional inter-module data and/or inter-module control interfaces.

The mobile communication device may be a mobile telephone, a Personal Digital Assistant (PDA), a network card or any other mobile communication apparatus which is capable of communicating via an air interface.

According to one aspect, the method comprises the step of switching to the first clock signal when the first RAT interface is active. An active RAT interface means that communication via the RAT interface and at least one antenna of the mobile communication device is possible so that data may be received from and transmitted to a mobile communication network. This may comprise that the RAT interface is connected to an access network. Moreover, when a RAT interface is active, measurement and synchronization data may be communicated via the RAT interface. In order to provide a stable communication via the first RAT interface, the switching may occur immediately after the first RAT interface becomes active (e.g., is connected to an access network).

The switching to the first clock signal may also be provided during a start-up phase of the mobile communication device, e.g., after the mobile communication device has been powered-on or after an airplane mode has been deactivated.

In order to synchronize the first and second network access modules, in particular during an inter-RAT handover between the network access modules, the method may further comprise the step of switching to the second clock signal in case the second RAT interface is active. The first and the second network access module may share at least one antenna. In this case, only one of the first and the second RAT interface is connected to an access network at the same time. By switching to either the first or the second clock signal depending on which of the first and the second RAT interface is connected, stable communication via the connected RAT interface can be provided.

For providing a stable synchronization between the first and the second network access module, in particular during an inter-RAT handover between the network access modules, the switching to the second clock signal may occur when the second clock signal has reached a predetermined degree of synchronization with a network clock signal received via the second RAT interface. The network clock signal may be received from a mobile communication network with which the second RAT interface is communicating.

In order to provide a stable communication with a mobile communication network when the first RAT interface is active, the first clock signal may be tuned to become synchronized with a network clock signal received via the first RAT interface. The network clock signal may be provided by a mobile communication network with which the first RAT interface is communicating.

A switching to the first clock signal may also be performed when the second RAT interface is active. Inter-RAT measurements may be performed in the first network access module by using the second clock signal. Such inter-RAT measurements may comprise measurements of cells belonging to the first RAT interface, e.g., measurements on downlink physical channels belonging to the first RAT interface. For 3G Partnership Project (3GPP) mobile communication standards, various kinds of inter-RAT measurements are standardized in the 3GPP specifications.

In order to synchronize the switching between the first clock signal and the second clock signal, switching control commands may be obtained from a baseband signal processing stage provided in or attached to the first network access module. Alternatively, the switching control commands may also be obtained from a baseband signal processing stage provided in or attached to the second network access module. It is also possible that the switching control commands are obtained from either an RF signal processing stage provided in or attached to the first network access module or an RF signal processing stage provided in or attached to the second network access module.

The baseband signal processing stage for the first network access module may control which clock signal is used as the reference clock signal in the first network access module and the baseband signal processing stage for the second network access module may control which clock signal is used as the reference clock signal in the second network access module. In order to align the control of both baseband signal processing stages, an interface may be provided between the baseband signal processing stages.

In order to enable a usage of the first clock signal as a reference clock signal in the second network access module, the method may further comprise the steps of converting the first clock signal to the second clock frequency and outputting the converted first clock signal for use as a second reference clock signal to the second network access module. The conversion and outputting steps may be performed in a conversion unit, e.g., a Phase-Locked Loop (PLL) circuit.

Moreover, in order to enable a usage of the third clock signal clocking the second network access module as a reference clock signal in the first network access module, the method may further comprise the step of converting the third clock signal having the second clock frequency to the second clock signal having the first clock frequency. The conversion step of the third clock signal may be performed in a further conversion unit, e.g., a further PLL circuit.

According to a further aspect, the third clock signal having the second clock frequency is generated in the second network access module and the first clock signal having the first clock frequency is generated in the first network access module. For this purpose, the first and the second network access module may comprise an integrated oscillator circuit and a crystal.

In order to ensure that only one of the first and the second RAT interface is active, (e.g., connected to an access network) at a given point of time in case the first and the second network access module share at least one antenna, the method may further comprise the step of switching between a connection of the first network access module to the at least one antenna and a connection of the second network access module to the at least one antenna.

As for a first hardware aspect, a network access module having a first RAT interface and being clocked at a first clock frequency is provided. The network access module comprises a generating unit capable of generating a first clock signal having the first clock frequency, a receiving unit capable of receiving a second clock signal having the first clock frequency, wherein the second clock signal is derived from a third clock signal clocking a further network access module at a second clock frequency, and a switching unit capable of selectively switching to either the first clock signal or the second clock signal for being used as a reference clock signal in the network access module.

The generating unit may comprise a combination of an integrated oscillator circuit and a crystal. The receiving unit may be a receiving interface included in an RF signal processing stage provided in or attached to the network access module. The switching unit may be provided in or attached to the RF signal processing stage and the control of the switching unit may be provided in or attached to the baseband signal processing stage.

The network access module may further comprise a tuning unit capable of tuning the first clock signal to become synchronized with a network clock signal received via the RAT interface. The tuning unit may be provided in or attached to the RF signal processing stage and the control of the tuning unit may be provided in or attached to the baseband signal processing stage.

According to a further aspect, the network access module comprises a first converting unit capable of converting the first clock signal to the second clock frequency, and a second converting unit capable of converting the third clock signal having the second clock frequency to the second clock signal having the first clock frequency. The first and the second converting unit may be implemented as PLL circuits.

As for a second hardware aspect, a mobile communication device is provided. The device comprises a first network access module clocked at a first clock frequency, a second network access module clocked at a second clock frequency and a first frequency conversion unit capable of converting signals having the first clock frequency to the second clock frequency.

The mobile communication device may further comprise a second frequency conversion unit capable of converting signals having the second clock frequency to the first clock frequency.

### Brief description of the drawings

In the following, the invention will be described with reference to exemplary embodiments illustrated in the drawings, wherein
- Fig. 1: is a schematic block diagram illustrating an embodiment of a mobile communication device;

- Fig. 2: is a flow chart illustrating an embodiment of a method for synchronizing different network access modules in a mobile communication device during a start-up phase of the device;
- Fig. 3: is a flow chart illustrating a first embodiment of a method for synchronizing different network access modules in a mobile communication device during inter-RAT handover;
- Fig. 4: is a flow chart illustrating a second embodiment of a method for synchronizing different network access modules in a mobile communication device during inter-RAT handover; and
- Fig. 5: is a flow chart illustrating an embodiment of a method for synchronizing different network access modules in a mobile communication device from the perspective of a network access module.

### Description of preferred embodiments

In the following, for purposes of explanation and not limitation, specific details are set forth, such as particular sequences of steps, components and configurations, in order to provide a thorough understanding of the present invention. It will be apparent to one skilled in the art that the present invention may be practiced in other embodiments that depart from these specific details. For example, while the embodiments will be described with reference to network access modules which are working according to the CDMA and LTE standards, it will be apparent to the skilled person that the invention can also be practiced in context with network access modules which are working in accordance with other mobile communication standards, e.g., the Enhanced Data Rate for GSM Evolution (EGDE), the High Speed Packet Access (HSPA) or any Wireless Local Area Network (WLAN) standard. Moreover, while the embodiments will be described with clock frequencies of 19.2 MHz and 26 MHz, it will be apparent to the skilled person that the invention can also be practiced in context with other clock frequencies.

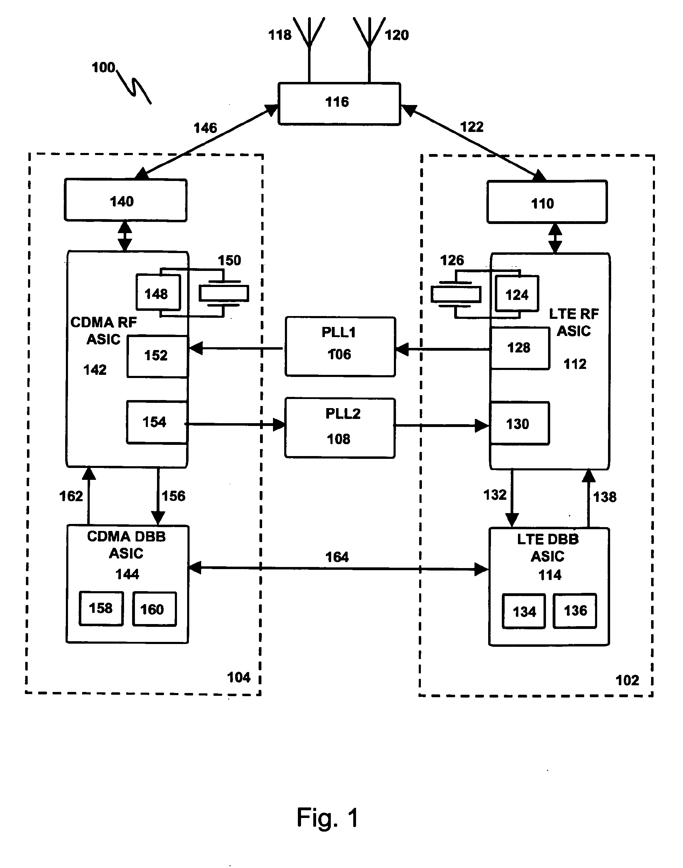

Fig. 1 shows a schematic block diagram illustrating an embodiment of a mobile communication device 100. The mobile communication device 100 comprises an LTE network access module 102 which is working in accordance with the LTE standard, a CDMA network access module 104 which is working in accordance with a CDMA standard (e.g., WCDMA), a first PLL circuit 106 which is provided between the LTE network access module 102 and the CDMA network access module 104, a second PLL circuit 108 which is provided between the LTE network access module 102 and the CDMA network access module 104, an antenna switch 116 and antennas 118 and 120.

The LTE network access module 102 is clocked at 26 MHz and the CDMA network access module 104 is clocked at 19.2 MHz. Moreover, the LTE network access module 102 and the CDMA network access module 104 are provided in this embodiment as separate chips or chip sets. Since both network access modules 102 and 104 are provided as separate chips or chip sets, it is more easily possible to combine an already existing network access module with a newly developed network access module in a mobile communication device. However, the present technique for synchronizing different network access modules is not limited to one-chip solutions or separate chips or chip sets and solutions comprising several chips or chip sets (e.g., separate RF and DBB chips) may also be used.

The LTE network access module 102 comprises an LTE RAT interface 110, an LTE RF signal processing stage 112 which is implemented as an LTE RF ASIC, and an LTE baseband signal processing stage 114 which is implemented as an LTE DBB ASIC. The LTE RF signal processing stage 112 may also be implemented as more than one LTE RF ASIC and additional RF components, like e.g. for an RF frontend. The LTE RAT interface 110 provides a connection 122 to the antenna switch 110 so that communication via the antennas 118 and 120 is possible.

The LTE RF ASIC 112 comprises an integrated oscillator circuit 124 which is connected to a crystal 126. The integrated oscillator circuit 124 together with the crystal 126 generate a 26 MHz clock signal. The LTE RF ASIC 112 further comprises a transmitting unit 128, which is transmitting the 26 MHz clock signal to the first PLL circuit 106 and a receiving unit 130, which is receiving a converted 26 MHz clock signal from the second PLL circuit 108.

The 26 MHz clock signals are selectively provided from the LTE RF ASIC 112 to the LTE DBB ASIC 114, as indicated by arrow 132. The LTE DBB ASIC 114 comprises a tuning unit 134 and a switching unit 136. The tuning unit 134 controls the integrated oscillator circuit 124 via control interface 138. In particular, the tuning unit 134 controls the 26 MHz clock signal generated by the integrated oscillator circuit 124 so that it becomes synchronized with an LTE network clock signal. The LTE network access module 102 receives via the LTE RAT interface 110 the LTE network clock signal from a LTE mobile communication network (not shown).

The switching unit 136 controls which signal (i.e., either the 26 MHz clock signal generated by the integrated oscillator circuit 124 or the converted 26 MHz clock signal received by the receiving unit 130 from the second PLL circuit 108) is used as the reference clock signal in the LTE network access module 102.

Similar to the LTE network access module 102, the CDMA network access module 104 comprises a CDMA RAT interface 140, a CDMA RF signal processing stage 142 which is implemented as a CDMA RF ASIC, and a CDMA baseband signal processing stage 144 which is implemented as a CDMA DBB ASIC. The CDMA RF signal processing stage 142 may also be implemented as more than one CDMA RF ASIC and additional RF components, like e.g. for an RF frontend. The CDMA RAT interface 140 provides a connection 146 with the antenna switch 116 so that communication of the CDMA network access module 104 via the antennas 118 and 120 with a CDMA mobile communication network (not shown) is possible.

The CDMA RF ASIC 142 comprises an integrated oscillator circuit 148 which is connected to a crystal 150. The integrated oscillator circuit 148 and the crystal 150 generate a 19.2 MHz clock signal. The CDMA RF ASIC 142 further comprises a receiving unit 152 that is receiving a converted 19.2 MHz clock signal from the first PLL circuit 106 and a transmitting unit 154 that is transmitting the 19.2 MHz clock signal generated by the integrated oscillator circuit 148 to the second PLL circuit 108. The 19.2 MHz clock signals are selectively provided from the CDMA RF ASIC 142 to the CDMA DBB ASIC 144, as indicated by arrow 156.

CDMA DBB ASIC 144 comprises a tuning unit 158 and a switching unit 160. The tuning unit 158 controls the integrated oscillator circuit 150 via control interface 162. In particular, the tuning of the integrated oscillator circuit 150 is controlled via control interface 162. Moreover, the tuning unit 158 controls the 19.2 MHz clock signal generated by the integrated oscillator circuit 148 so that it becomes synchronized with a CDMA network clock signal, which the CDMA network access module 104 receives via the CDMA RAT interface 140 from the CDMA mobile communication network.

The switching unit 160 controls which signal (i.e., either the 19.2 MHz clock signal generated by the integrated oscillator circuit 148 or the converted 19.2 MHz clock signal received by the receiving unit 152 from the first PLL circuit 106) is used as the reference clock signal in the CDMA network access module 104.

As regards the first PLL circuit 106, it receives the 26 MHz clock signal generated by the integrated oscillator circuit 124 from the transmitting unit 128 of the LTE RF ASIC 112, converts the signal into a 19.2 MHz clock signal and transmits the converted signal to the receiving unit 152 at the CDMA RF ASIC 142. Similarly, the second PLL circuit 108 receives the 19.2 MHz clock signal generated by the integrated oscillator circuit 148 from the transmitting unit 154 of the CDMA RF ASIC 142, converts the signal into a 26 MHz clock signal and transmits the converted signal to the receiving unit 130 at the LTE RF ASIC 112.

A control interface 164 is provided between the LTE DBB ASIC 114 and the CDMA DBB ASIC 144. For aligning the control between the LTE network access module 102 and the CDMA network access module 104, the LTE DBB ASIC 114 controls the CDMA DBB ASIC 144, i.e., the LTE DBB ASIC 114 informs the CDMA DBB ASIC 144 when to switch the source of the 19.2 MHz clock signals. Thus, the LTE DBB ASIC 114 is a master in a master-slave configuration.

The antenna switch 116 provides a selective connection of either the LTE network access module 102 or the CDMA network access module 104 with the antennas 118 and 120. The antenna switch may be controlled by the LTE DBB ASIC 114.

Although the LTE network access module 102, the CDMA network access module 104, the first PLL circuit 106, the second PLL circuit 108 and the antenna switch 116 are shown as separate units, at least one of the first PLL circuit 106, the second PLL circuit 108 and the antenna switch 116 may be integrated in either the LTE network access module 102 and/or the CDMA network access module 104. Moreover, the LTE RAT interface 110 may be integrated in any component of the LTE network access module 102 and the CDMA RAT interface 140 may be integrated in any component of the CDMA network access module 104.

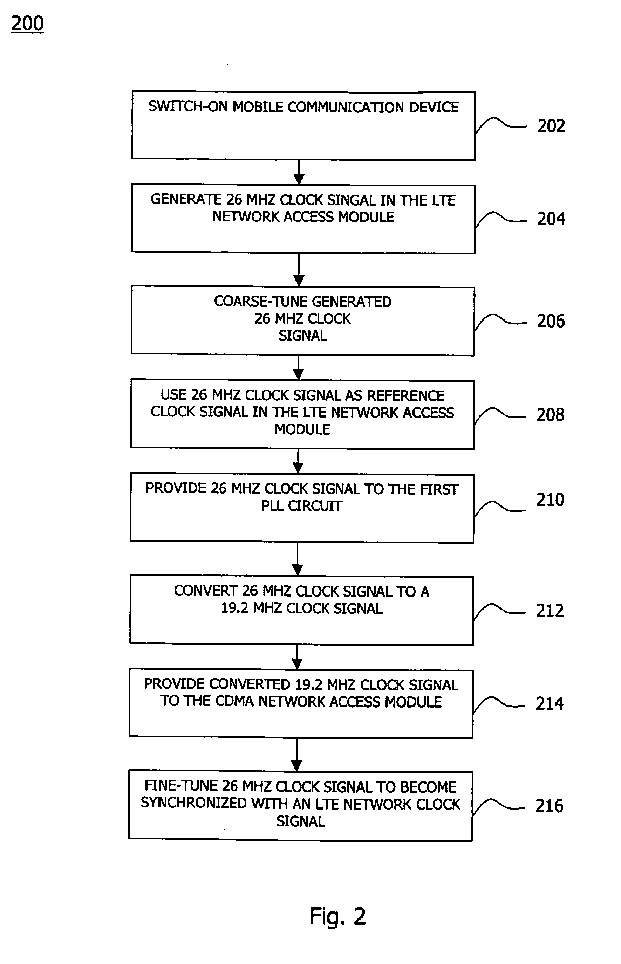

Fig. 2 shows a flow chart 200 illustrating an embodiment of a method for synchronizing different network access modules in a mobile communication device during a start-up phase of the device. The method will be explained with reference to the mobile communication device 100 of Fig. 1.

The method starts in step 202 by switching the mobile communication device 100 on. The switching on may also comprise an activation of the mobile communication device 100 from an airplane mode. Thereafter, in step 204, the integrated oscillator circuit 124 together with the crystal 126 of the LTE network access module 102 generate a 26 MHz clock signal. The 26 MHz clock signal is in step 206 coarse-tuned, e.g., based on pre-set calibration values.

Subsequently, in step 208, the coarse-tuned 26 MHz clock signal is used as a reference clock signal in the LTE network access module 102. Thereafter, in step 210, the 26 MHz clock signal is provided by the transmitting unit 128 of the LTE RF ASIC 112 to the first PLL circuit 106.

In step 212, the 26 MHz clock signal is converted by the first PLL circuit 106 to a 19.2 MHz clock signal. Thereafter, in step 214, the converted 19.2 MHz clock signal is provided by the first PLL circuit 106 to the receiving unit 152 of the CDMA RF ASIC 142. Accordingly, the converted 19.2 MHz clock signal is used as a reference clock signal in the CDMA network access module 104.

In case the LTE RAT interface 110 becomes active, still the reference clock signals for both the LTE network access module 102 and the CDMA network access module 104 are generated by the integrated oscillator circuit 124. However, as shown in step 216, the LTE DBB ASIC 114 additionally provides a fine-tuning of the 26 MHz clock signal so that it becomes synchronized with an LTE network clock signal, which the LTE network access module has received via the LTE RAT interface 110 from an LTE mobile communication network.

In case the LTE RAT interface 110 becomes inactive again, the reference clock signals for the LTE network access module 102 and the CDMA network access module 104 are still generated by the integrated oscillator circuit 124.

Accordingly, the integrated oscillator circuit 124 is the default reference clock source.

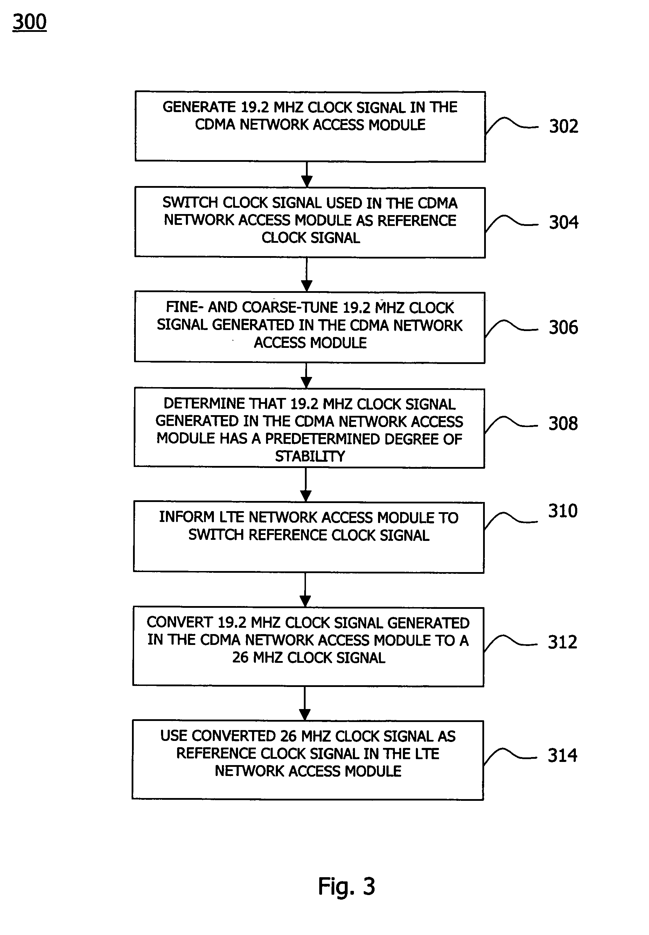

Fig. 3 shows a flow chart 300 illustrating a first embodiment of a method for synchronizing different network access modules in a mobile communication device during inter-RAT handover. The method will be explained with reference to the mobile communication device 100 shown in Fig. 1.

In this embodiment, it is assumed that the LTE RAT interface 110 is active, the CDMA RAT interface 140 is inactive and an inter-RAT handover from the LTE network access module 102 to the CDMA network access module 104 occurs.

The method starts in step 302 in that a 19.2 MHz clock signal is generated in the integrated oscillator circuit 148 of the CDMA RF ASIC 142. Thereafter, in step 304, a switching of the converted 19.2 MHz clock signal received from the first PLL circuit 106 by the receiving unit 152 to the clock signal generated by the integrated oscillator circuit 148 is performed. Thus, the 19.2 MHz clock signal generated by the integrated oscillator circuit 148 is used instead of the converted 19.2 MHz clock signal received from the first PLL circuit 106 as the reference clock signal of the CDMA network access module 104.

Thereafter, in step 306, the 19.2 MHz clock signal generated by the integrated oscillator circuit 148 is coarse- and fine-tuned to become synchronized with a CDMA network clock signal received via the CDMA RAT interface 140 from a CDMA mobile communication network.

In step 308, it is determined that the 19.2 MHz clock signal generated by the integrated oscillator circuit 150 has reached a predetermined degree of stability.

The 19.2 MHz clock signal may have reached the predetermined degree of synchronization when at least one of the following conditions (i) to (iii) is fulfilled:
(i) A coarse frequency tuning has been provided to the 19.2 MHz clock signal.
(ii) A coarse frequency tuning and a fine frequency tuning for a predetermined period of time have been provided to the 19.2 MHz clock signal. In this case, the predetermined period of time may be determined based on a worst-case scenario.
(iii) A coarse frequency tuning and a fine frequency tuning have been provided to the 19.2 MHz clock signal, wherein a predetermined level of convergence has been reached by the fine frequency tuning. The predetermined level of convergence may be determined based on whether a frequency adaptation of the 19.2 MHz clock signal has reached a predetermined threshold value.

In this embodiment, it is assumed that the 19.2 MHz clock signal generated by the integrated oscillator circuit 148 is sufficiently stable after the signal has been coarse-and fine-tuned for a predetermined period of time.

After it has been determined that the 19.2 MHz clock signal generated by the integrated oscillator circuit 150 has reached the predetermined degree of stability, the CDMA DBB ASIC 144 informs the LTE DBB ASIC 114 via the control interface 164 to switch to the clock signal generated by the integrated oscillator circuit 148.

For this, in step 312, the 19.2 MHz clock signal generated by the integrated oscillator circuit 148 is provided to the second PLL circuit 108, converted therein to a 26 MHz clock signal and provided to the receiving unit 130 of the LTE RAT ASIC 112.

Thereafter, in step 314, the LTE DBB ASCIC 114 switches the clock signal used in the LTE network access module 102 as a reference clock signal. For this, the converted 26 MHz clock signal received from the second PLL circuit 108 is used instead of the 26 MHz clock signal generated by the integrated oscillator circuit 124 as the reference clock signal in the LTE network access module 102.

Thus, the LTE network access module 102 and the CDMA network access module 104 are always synchronized and derive its reference clock signals from the same reference clock signal source when both network access modules 102 and 104 are active, in particular during inter-RAT handover.

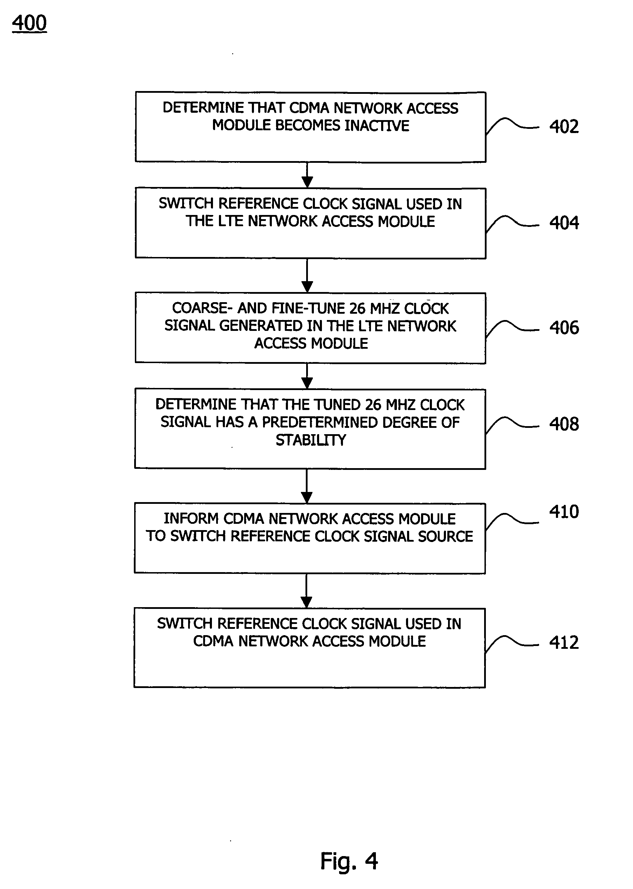

Fig. 4 is a flow chart 400 illustrating a second embodiment of a method for synchronizing different network access modules in a mobile communication device during inter-RAT handover. The method will be explained with reference to the mobile communication device 100 shown in Fig. 1. The method may be provided subsequent to the method illustrated in flow chart 300.

In this embodiment, it is assumed that the CDMA RAT interface 140 is active, the LTE RAT interface 110 is inactive and the CDMA RAT interface 140 becomes inactive. This embodiment covers both possibilities that the LTE RAT interface 110 becomes active or remains inactive after the CDMA RAT interface 140 becomes inactive.

The method starts in step 402 by determining that the CDMA RAT interface 140 becomes inactive. Thereafter, in step 404, the LTE network access module 102 switches to use the 26 MHz clock signal generated by the integrated oscillator circuit 124 instead of the converted 26 MHz clock signal provided by the second PLL circuit 108 as a reference clock signal in the LTE network access module 102. In this embodiment, the LTE network access module 102 is the default source for generating the reference clock signal for both network access modules 102 and 104.

Subsequently, in step 406, the clock signal generated by the integrated oscillator circuit 124 is coarse- and fine-tuned to a LTE network clock signal received via the LTE RAT interface 110 from an LTE mobile communication network.

In step 408, it is determined that the 26 MHz clock signal generated by the integrated oscillator circuit 124 has reached a predetermined degree of stability. Various stability criteria have already been discussed above with regard to Fig. 3. In this embodiment, it is assumed that the 26 MHz clock signal generated by the integrated oscillator circuit 124 is sufficiently stable after it has been coarse-tuned.

After the predetermined degree of stability has been determined in step 408, the LTE DBB ASIC 114 informs in step 410 the CDMA DBB ASIC 144 via control interface 164 to switch its reference clock source. Thus, in step 412, the CDMA network access module 104 switches its reference clock signal from the 19.2 MHz clock signal generated by the integrated oscillator circuit 148 to the converted 19.2 MHz reference clock signal received via the receiving unit 152 from the first PLL circuit 106.

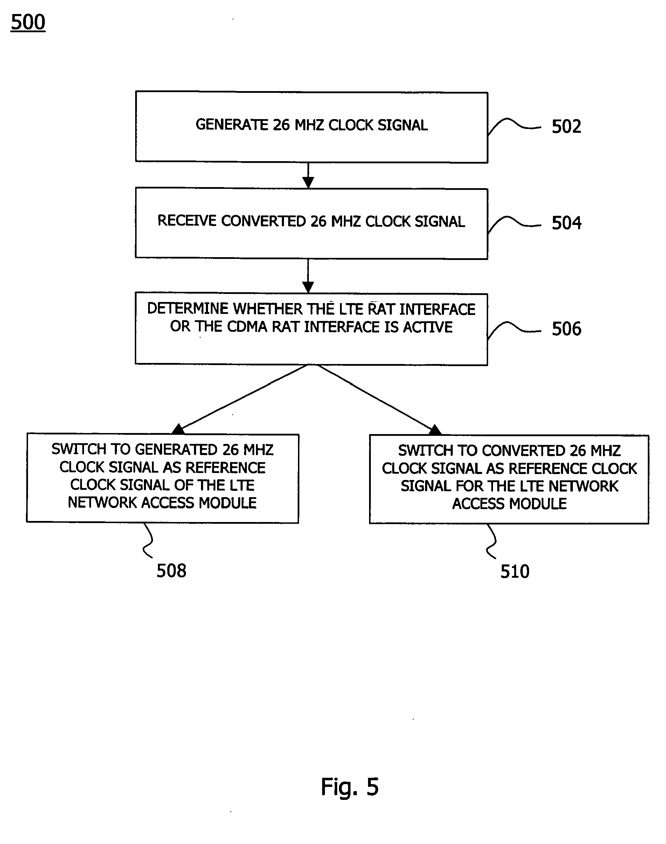

Fig. 5 is a flow chart 500 illustrating an embodiment of a method for synchronizing different network access modules in a mobile communication device from the perspective of a network access module. The method will be explained with reference to the mobile communication device 100 shown in Fig. 1, in particular from the perspective of the LTE network access module 102.

The method starts in step 502 by generating a 26 MHz clock signal in the integrated oscillator circuit 124. Thereafter, in step 504, a converted 26 MHz clock signal is received from the second PLL circuit 108.

In step 506, it is determined whether the LTE RAT interface 110 or the CDMA RAT interface 140 is active. If it is determined in step 506 that the LTE RAT interface 110 is active, the method proceeds to step 508 in which a switching to the 26 MHz clock signal from the integrated oscillator circuit 124 as the reference clock signal for the LTE network access module 102 is performed. If it is determined in step 506 that the CDMA RAT interface 140 is active, the method proceeds to step 510 in which a switching to the converted 26 MHz clock signal as the reference clock signal for the LTE network access module 102 is performed. Thus, always the best-fitting reference clock signal is used in the LTE network access module 102 depending on which RAT interface 110, 140 is active.

A further embodiment concerning inter-RAT measurements provided by a mobile communication device is explained with reference to Fig. 1.

In case the mobile communication device 100 is camped on one of the LTE RAT interface 110 or the CDMA RAT interface 140, inter-RAT measurements are performed by the network access module having the non-camped RAT interface. For performing these inter-RAT measurements, no activation-switching of the RAT interfaces has to be provided.

For example, in case the mobile communication device 100 is camped on the LTE RAT, the CDMA network access module 104 uses the reference clock signal provided by the first PLL circuit 106 to perform inter-RAT measurements. In case the CDMA RAT interface 140 is active, the LTE network access module 102 uses the 26 MHz clock signal provided by the second PLL circuit 108 in order to provide inter-RAT measurements. The inter-RAT measurements may comprise measurements on a downlink physical channel of the non-camped network access module.

According to the present technique for synchronizing different network access modules, the time required for executing inter-RAT measurements can be reduced. This is achieved in that the network access module which performs the inter-RAT measurements always uses the reference clock signal generated by the integrated oscillator circuit provided in the other network access module. Thus, no clock synchronization time period is required for providing inter-RAT measurements.

Moreover, the smaller time period for providing inter-RAT measurements can be used to minimize a transmission/reception time gap, which has to be inserted at the other network access module to enable disturbance-free measurements. Thus, a higher data throughput in both the sending and the receiving direction is provided at the network access module.

The present technique for synchronizing different network access modules in a mobile communication device is an effort optimized solution for providing a stable and secure synchronizing of different network access modules. Moreover, a clean and synchronous switching between two clock modes, i.e. the case that the reference clock signal is generated by an integrated oscillator circuit and the case that the reference clock signal is received via a PLL, is provided.

It is believed that many advantages of the present invention will be fully understood from the foregoing description, and it will be apparent that various changes may be made in the form, construction and arrangement of the exemplary aspects thereof without departing from the scope of the invention or without sacrificing all of its advantages. Because the invention can be varied in many ways, it will be recognized that the invention should be limited only by the scope of the following claims.

## Claims

1. A method (500) for synchronizing different network access modules in a mobile communication device, the device comprising a first network access module (101) having a first radio access technology, or RAT, interface (110) and being clocked at a first clock frequency and a second network access module (104) having a second RAT interface (140) and being clocked at a second clock frequency, the method comprising the following steps:
- generating (502) a first clock signal having the first clock frequency,
- receiving (504) a second clock signal having the first clock frequency, the second clock signal being derived from a third clock signal clocking the second network access module (104), and
- selectively switching (508, 510) to either the first clock signal or the second clock signal for being used as a reference clock signal in the first network access module (102).

2. The method of claim 1, further comprising
- switching (508) to the first clock signal when the first RAT interface (110) is active.

3. The method any of claims 1 to 2, further comprising
- switching (510) to the second clock signal when the second RAT interface (140) is active.

4. The method of claim 3, wherein the switching (510) to the second clock signal occurs when the second clock signal has reached a predetermined degree of synchronization with a network clock signal received via the second RAT interface (140).

5. The method of any of claims 1 to 4, further comprising
- tuning the first clock signal to become synchronized with a network clock signal received via the first RAT interface (110).

6. The method of any of claims 1 to 5, further comprising
- performing inter-RAT measurements in the first network access module (102) by using the second clock signal.

7. The method of any of claims 1 to 6, further comprising
- obtaining switching control commands from a baseband signal processing stage (114) provided in the first network access module (102).

8. The method of any of claims 1 to 7, further comprising
- converting the first clock signal to the second clock frequency, and
- outputting the converted first clock signal for use as a second reference clock signal to the second network access module (104).

9. The method of any of claims 1 to 8, further comprising
- converting the third clock signal having the second clock frequency to the second clock signal having the first clock frequency.

10. The method of claim 9, further comprising
- generating the third clock signal having the second clock frequency in the second network access module (104), and
- generating (502) the first clock signal having the first clock frequency in the first network access module (102).

11. The method of any of claims 1 to 10, wherein the first (102) and the second (104) network access module share at least one antenna (118, 120), the method further comprising
- switching between a connection of the first network access module (102) to the at least one antenna (118, 120) and a connection of the second network access module (104) to the at least one antenna (118, 120).

12. A network access module (102) having a first radio access technology, or RAT, interface (110) and being clocked at a first clock frequency, comprising
- a generating unit (124, 126) capable of generating a first clock signal having the first clock frequency,
- a receiving unit (130) capable of receiving a second clock signal having the first clock frequency, wherein the second clock signal is derived from a third clock signal clocking a further network access module (104) at a second clock frequency, and
- a switching unit (112) capable of selectively switching to either the first clock signal or the second clock signal for being used as a reference clock signal in the network access module (102).

13. The network access module of claim 12, further comprising
- a tuning unit (112) capable of tuning the first clock signal to become synchronized with a network clock signal received via the RAT interface (110).

14. The network access module of any of claims 12 or 13, further comprising
- a baseband signal processing stage (114) capable of controlling the switching unit (136).

15. The network access module of any of claims 12 to 14, further comprising at least one of
- a first converting unit (106) capable of converting the first clock signal to the second clock frequency, and
- a second converting unit (108) capable of converting the third clock signal having the second clock frequency to the second clock signal having the first clock frequency.

16. A mobile communication device (100), comprising
- the network access module (102) of any of claims 12 to 14,
- a first frequency conversion unit (106) capable of converting the first clock signal to the second clock frequency, and
- the further network access module (104) clocked at the second clock frequency.

17. The mobile communication device of claim 16, further comprising
- a second frequency conversion unit (108) capable of converting the third clock signal having the second clock frequency to the second clock signal having first clock frequency.
